# EUROPÄISCHE PATENTSCHRIFT

(11) **EP 2 881 340 B1**
(45) Veröffentlichungstag und Bekanntmachung des Hinweises auf die Patenterteilung: **08.03.2017**
(21) Anmeldenummer: 14004111.2
(22) Anmeldetag: 05.12.2014
(51) Int. Cl.: B65D 90/04, B65G 69/04

(54) **Verfahren zum Befüllen eines 20 Fuss Containers**
Method for filling a 20 ft container
Procédé de remplissage d'un conteneur 20 pieds

(30) Priorität: 06.12.2013 DE 102013020123
(43) Veröffentlichungstag der Anmeldung: 10.06.2015
(73) Patentinhaber: Avangard Malz AG, 56070 Koblenz (DE)
(72) Erfinder: Best, Manuel, 56337 Eitelborn (DE); Steinberg, Volker, 56170 Bendorf (DE)
(74) Vertreter: Castell, Klaus

(56) Entgegenhaltungen:
- EP-A1- 0 480 741
- EP-A1- 0 959 024
- EP-A2- 1 354 823
- WO-A1-2013/155860
- CN-Y- 2 863 717
- DE-U1- 8 902 742
- JP-A- 2000 355 426
- US-A- 4 411 578
- US-A- 4 946 291
- US-A- 5 511 681
- US-A1- 2006 078 412

## Beschreibung

Die Erfindung betrifft ein Verfahren zum Befüllen eines 20 Fuß Containers mit einem Schüttgut.

Um einen Container mit Schüttgütern wie beispielsweise Malz zu befüllen, wird in Containern eine Auskleidung vorgesehen, die aus einer Kunststofffolie oder einem textilen Material besteht. Diese Auskleidung wird an der Stirnseite geöffnet und der Container wird dann über eine teleskopierbare Schnecke oder ein Transportband befüllt. Verschiedene Auskleidungen mit unterschiedlichen Öffnungen zeigt die US 5,511,681 A. Weitere Auskleidungen zeigen die EP 0 959 024 A1, die CN 2 863 717 Y, die EP 1 354 823 A2, die EP 0 480 741 A1 und die US 4 946 291 A.

Das Schüttgut kann jedoch auch in die Auskleidung bzw. in den Container eingeblasen werden. Durch Schrägstellen des Containers mittels verschiedener Hilfsmittel wie Kettenzügen, Hydraulikstempeln etc. kann die Beladung vereinfacht werden, da das Schüttgut durch Schwerkraft zur tiefsten Stelle fällt.

Das Befüllen eines speziell mit zwei Türen ausgerüsteten schräg gestellten Containers zeigt die JP-2000355426-A. Hierbei entstehen sehr hohe Spannungen am Liner und der für die Befüllung notwendige Umbau des eingesetzten Containers bedingt Zusatzkosten.

Beim Einladen und bei der Befüllung mittels eines Schleuderbandes wird das Schüttgut, wie beispielsweise Malz, mechanisch stark belastet und diese mechanische Belastung führt zu einer unerwünschten Erhöhung des Ausputzes (Staub und Malzkörner ≤ 2,2 mm).

Das Beladen eines senkrecht gestellten Containers bringt die Gefahr, dass sich während des Beladens Falten in der Auskleidung des Containers bilden, sodass die Auskleidung zwischen Schüttgut und Containerwand eingeklemmt wird. Gerade beim Absenken nach der Beladung und beim Leeren des Containers führen derartige Falten häufig zum Reißen der Auskleidung. Generell werden derartige Container mit einer Auskleidung, die auch als Liner Bag bezeichnet wird, so befüllt, dass ein gewisser Raum im Container unbeladen bleibt. In der Praxis kann ein 20 Fuß Container beispielsweise bei einer Beladung mit Malz nur mit 18 t ± 200 kg beladen werden.

Der Erfindung liegt daher die Aufgabe zugrunde, ein Verfahren zum Befüllen eines derartigen Containers vorzustellen.

Diese Aufgabe wird mit einem Verfahren mit den Merkmalen des Anspruchs 1 gelöst. Dies führt dazu, dass bei der Beladung eines senkrecht stehenden Containers das Schüttgut derart in den Container bzw. dessen Auskleidung gelangt, dass es sich im Container verteilt und einen Beladekegel erzeugt, mit dem nach Einebnung des Kegels nahezu der gesamte Container befüllt werden kann.

Wenn als Beladeöffnung in der Mitte der Stirnseite des Containers ein Beladestutzen angeordnet ist, führt dies dazu, dass eine etwa 10 % höhere Lademenge erreicht wird. Dies führt zu einer enormen Kosteneinsparung, da dadurch auch 10 % weniger Container befüllt, transportiert und entleert werden müssen. Darüber hinaus kann der Container über den in der Mitte der Stirnseite angeordneten Beladestutzen schneller als bisher beladen werden, da während des Beladevorgangs ein höherer Volumenstrom des Schüttguts möglich ist.

Der Container wird nicht durch den Beladestutzen entleert, sondern in einem seitlichen Randbereich der Stirnseite des Containers ist ein Stutzen zur Entleerung angeordnet. Der Container kann dadurch durch einfaches Kippen des Containers und Öffnen des Entleerungsstutzens schnell und vollständig entleert werden.

Weiterhin wird vorgeschlagen, dass in einem seitlichen Randbereich der Stirnseite eine verschließbare Öffnung angeordnet ist. Diese verschließbare Öffnung liegt vorzugsweise gegenüber dem zur Entleerung vorgesehenen Stutzen. Diese verschließbare Öffnung kann sich in der Stirnseite, längs der seitlichen Kante des Containers erstrecken oder sie kann sich U-förmig längs des Randbereichs der Stirnseite erstrecken. Dies ermöglicht es, die Auskleidung im Bereich der Stirnseite zu öffnen, um die Beladung zu beobachten und um mit einem Rakel oder Schieber das Schüttgut von der Mitte zu den Rändern zu verteilen. Insbesondere am Ende der Beladung sollte der verbleibende Kegel eingeebnet werden, um eine optimale Befüllung des Containers zu erreichen.

Eine einfache Handhabung sieht vor, dass die verschließbare Öffnung einen Reißverschluss aufweist.

Versuche haben gezeigt, dass es vorteilhaft ist, wenn der Beladestutzen einen Schlauch mit einem Durchmesser von 200 mm bis 500 mm aufweist. Dies ermöglicht ein besonders schnelles Befüllen des Containers und eine schonende Behandlung des Schüttgutes. Besonders vorteilhaft ist es, wenn der Container über ein teleskopierbares Beladerohr, an welchem außen ein Blähschlauch angebracht ist, befüllt wird.

Der Stutzen zur Entleerung weist vorzugsweise eine Querschnittsfläche von etwa 1.200 mm² auf. Beispielsweise kann die Querschnittsfläche rechteckig mit Kantenlängen von 400 mm und 300 mm ausgebildet sein.

Das der Erfindung zugrunde liegende Verfahren dient dem Befüllen eines Containers mit einem Schüttgut, wobei der Behälter eine Auskleidung aufweist. Als Auskleidung eignet sich insbesondere die zuvor beschriebene Auskleidung.

Erfindungsgemäß wird die Behälterauskleidung vor dem Befüllen aufgeblasen. Zum Aufblasen der Behälterauskleidung werden zunächst sämtliche Öffnungen bis auf eine Öffnung verschlossen. Anschließend wird vorzugsweise Luft in die Behälterauskleidung eingeblasen. Dies führt dazu, dass sich die Behälterauskleidung an die Innenwand des Containers anlegt und Falten weitgehend vermieden werden. Dadurch wird letztendlich beim Absenken und Entleeren des Behälters ein Reißen der Auskleidung vermieden.

Dazu wird der Containter vor dem Befüllen senkrecht gestellt. Ein senkrecht gestellter Behälter führt dazu, dass auch nach dem Aufblasen die Behälterauskleidung nicht wieder in sich zusammenfällt und während des Befüllens plan an der Containerinnenseite anliegt. Während des Befüllens des Containers bleibt ein geringer Überdruck aufrecht erhalten., der die Behälterauskleidung an die Innenseite des Containers drückt, um eine Faltenbildung zu vermeiden. Dazu kann außen auf dem Beladerohr ein Blähschlauch angebracht sein, welcher den Einfüllstutzen dicht verschließt und damit den leichten Überdruck erhält sowie den Austritt von Staub verhindert.

Verfahrensmäßig wird weiterhin vorgeschlagen, dass nach der Befüllung des Containers die Auskleidung geöffnet wird und mit einem Schieber das Schüttgut verteilt wird. Dabei kann auch schon am Ende des Befüllvorgangs mit der Verteilung des Schüttguts begonnen werden.

Eine derartige Verteilung ist auch durch einen Druck auf die Außenseite der Behälterauskleidung möglich. Vorteilhaft ist es jedoch, wenn der Schieber bei der Verteilung des Schüttguts innerhalb der Auskleidung angeordnet ist. Das Schüttgut kann dazu beispielsweise manuell mittels eines Schiebers oder Rakels verteilt werden. Es kann jedoch auch eine maschinelle Einrichtung vorgesehen sein, die den Schüttgutkegel einebnet, indem das Schüttgut im Bereich der Stirnseite des Containers eingeebnet wird.

Zwei Ausführungsbeispiele einer Behälterauskleidung sind in der Zeichnung dargestellt und werden im Folgenden näher beschrieben. Es zeigt
- Figur 1: eine schematische dreidimensionale Ansicht einer Auskleidung für einen Container und
- Figur 2: den in Figur 1 gezeigten Behälter mit Kordel.

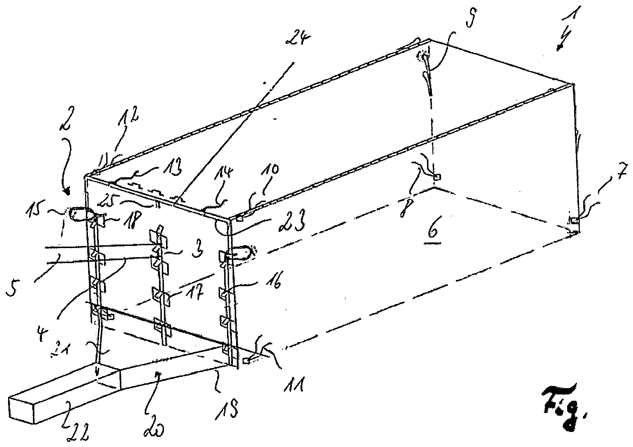

Die in der Figur 1 gezeigte Auskleidung 1 hat die Abmessungen der Innenseite eines Containers wie etwa eines 20 Fuß Containers mit den entsprechenden ISO-Abmessungen und daher eine Quaderform mit einer speziell ausgestalteten Stirnseite 2. An der Stirnseite 2 ist eine Beladeöffnung 3, an der ein Beladestutzen 4 vorgesehen ist, der wiederum in einen Beladeschlauch 5 übergeht.

Dieser Beladestutzen 4 ist in der Mitte der Stirnseite 2 der Auskleidung 1 angeordnet. Beladeschlauch 5, Beladestutzen 4 und Beladeöffnung 3 sind dabei so ausgebildet, dass über den Beladeschlauch 5 Schüttgüter wie beispielsweise Malz zum Beladestutzen 4 und von dort zur Beladeöffnung 3 fließen können, um in den quaderförmigen Bereich 6 der Auskleidung 1 zu gelangen.

An der Auskleidung sind Befestigungsbänder 7-15 und weitere Öffnungs- und Haltevorrichtungen 16-18 vorgesehen. Damit wird die Auskleidung 1 an der Innenseite eines Containers befestigt und die Stirnseite kann beispielsweise zu Reinigungszwecken geöffnet werden.

In einem seitlichen Randbereich 19 der Stirnseite 2 ist ein weiterer Stutzen 20 zur Entleerung der Auskleidung 1 vorgesehen. Dieser Stutzen 20 hat einen konischen Bereich 21 und daran anschließend einen im Querschnitt rechteckigen schlauchförmigen Bereich 22, über den die Auskleidung bzw. der Container entleert werden kann.

Der Beladestutzen 4 hat einen Beladeschlauch 5 mit einem Durchmesser von 250 mm bis 500 mm und der Stutzen zur Entleerung hat eine Querschnittsfläche von 300 mm x 400 mm. Die Abmessungen von Beladestutzen 4 und Entladestutzen 20 können jedoch auch ähnlich ausfallen, wobei auch der Beladestutzen 4 eine im Querschnitt rechteckige Schlauchform haben kann und der Entladestutzen 20 eine kreisförmige Querschnittsfläche.

In einem weiteren seitlichen Bereich 23 der Stirnseite 2 ist eine verschließbare Öffnung 24 vorgesehen, die mit einem Reißverschluss 25 verschlossen ist.

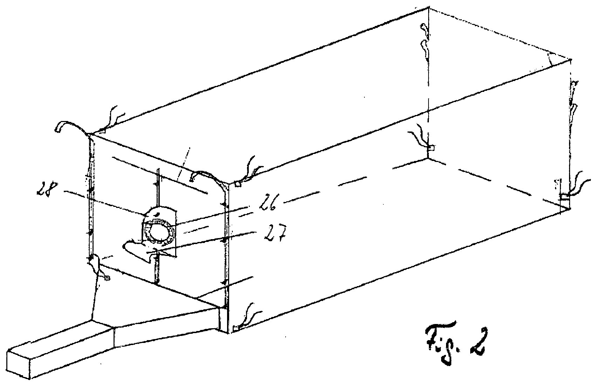

Bei dem in Figur 2 gezeigten Ausführungsbeispiel ist eine Kordel 26 vorgesehen, die in einem Innendurchmesser einer Rosette umlaufend eingenäht ist. Diese Öffnung kann mit einer Klappe 27 über einen Reißverschluss 28 verschlossen werden. Dies ermöglicht es, ein Beladerohr in die Auskleidung einzuführen und mit der Kordel 26 die Auskleidung gegen das Beladerohr abzudichten. Der Beladestutzen ist hier extrem verkürzt, so dass er im Wesentlichen von Rosette gebildet wird, in deren Innendurchmesser die Kordel geführt ist.

Bei der Verwendung einer derartigen Auskleidung wird die Auskleidung zunächst mittels der Befestigungseinrichtungen 7-15 am Container (nicht gezeigt) befestigt. Anschließend wird der Container senkrecht gestellt, sodass die Stirnseite 2 die Oberseite des Containers bildet.

Anschließend wird die Auskleidung 1 über die Öffnung 24 aufgeblasen, während die Öffnungen im Wesentlichen verschlossen sind. Dadurch spannt sich die Oberfläche der Auskleidung und legt sich an die Innenseite des Containers an und bläht sich so weit auf, dass ein Beladerohr in den Beladestutzen 5 eingeführt werden kann. Anschließend wird die Auskleidung wie ein Blähschlauch außen am Beladerohr aufgeblasen. Danach wird über das Beladerohr ein Schüttgut wie beispielsweise Malz in die Behälterauskleidung und damit in den Container gefüllt bis sich im Bereich der Stirnseite 3 der Auskleidung 1 ein Schüttgutkegel ausbildet.

Anschließend wird die Auskleidung 1 an der Öffnung 24 durch Öffnen des Reißverschlusses 25 geöffnet. Dies ermöglicht es, mit einem Schieber das Schüttgut in die Randbereiche und insbesondere in die Eckbereiche zu verschieben, um den Container möglichst weitgehend mit Schüttgut zu befüllen.

Anschließend wird das Beladerohr vom Beladestutzen getrennt und der Behälter geschlossen.

Zum Entleeren des Containers wird der Behälter geöffnet und nach leichtem Anheben des Behälters an der dem Entleerungsstutzen 20 gegenüberliegenden Seite fließt über den Stutzen 20 und den Entleerungsschlauch 22 das Schüttgut aus dem Container. Die Auskleidung kann letztlich verworfen werden und durch eine neue ersetzt werden oder der Behälter wird erneut über den Schlauch 5 befüllt.

## Patentansprüche

1. Verfahren zum Befüllen eines 20 Fuß Containers mit einem Schüttgut, bei dem der Container mit einer Auskleidung (1), die im Wesentlichen eine Quaderform hat und an einer Stirnseite (2) eine Beladeöffnung (3), versehen wird und bei dem die Containerauskleidung (1) vor dem Befüllen aufgeblasen wird, ***dadurch gekennzeichnet, dass*** der Container vor dem Befüllen senkrecht gestellt wird und der senkrecht gestellte Behälter mit dem Schüttgut befüllt wird, wobei als Beladeöffnung (3) ein Beladestutzen (4) in der Mitte der Stirnseite (2) angeordnet ist.

2. Verfahren nach Anspruch 1, ***dadurch gekennzeichnet, dass*** nach der Befüllung des Containers die Auskleidung (1) geöffnet wird und mit einem Schieber das Schüttgut verteilt wird.

3. Verfahren nach Anspruch 2, ***dadurch gekennzeichnet*, *dass*** bei der Verteilung des Schüttgutes der Schieber innerhalb der Auskleidung (1) angeordnet ist.

## Claims

1. A method of filling a 20 foot container with a bulk material, in which the container is provided with a lining (1) which has a substantially rectangular shape and a loading opening (3) is provided on a front end (2) and in which the container lining (1) is inflated prior to filling, ***characterized in that*** the container is positioned vertically prior to filling and the vertically positioned container is filled with the bulk material, wherein a loading connecting piece (4) is arranged as the loading opening (3) in the middle of the front end (2).

2. The method according to claim 1, ***characterized in that*** after the container has been filled, the lining (1) is opened and the bulk material is distributed using a slide.

3. The method according to claim 2, ***characterized in that*** during the distribution of the bulk material the slide is arranged within the lining (1).

## Revendications

1. Procédé pour remplir un conteneur de 20 pieds avec un matériau en vrac, dans lequel le conteneur est doté d'un revêtement (1) ayant sensiblement une forme carrée et d'une ouverture de chargement (3) sur une face frontale (2), et dans lequel le revêtement de conteneur (1) est gonflé avant le remplissage, ***caractérisé en ce que*** le conteneur est mis en position verticale avant le remplissage et **en ce que** le conteneur posé verticalement est rempli avec le matériau en vrac, dans lequel une tubulure de remplissage (4) en guise d'ouverture de remplissage (3) est disposée au milieu de la face frontale (2).

2. Procédé selon la revendication 1, ***caractérisé en ce que**,* après le remplissage du conteneur, le revêtement (1) est ouvert et **en ce que** le matériau en vrac est réparti avec une raclette.

3. Procédé selon la revendication 2, ***caractérisé en ce que**,* lors de la répartition du matériau en vrac, la raclette est disposée à l'intérieur du revêtement (1).
